# EUROPEAN PATENT APPLICATION

(11) **EP 3 518 124 A1**
(43) Date of publication of application: **31.07.2019**
(21) Application number: 17893499.8
(22) Date of filing: 29.09.2017
(51) Int. Cl.: G06F 17/30

(54) **WEBPAGE RENDERING METHOD AND RELATED DEVICE**

(30) Priority: 20.01.2017 CN 201710042896
(71) Applicant: Huawei Technologies Co., Ltd., Longgang District Shenzhen, Guangdong 518129 (CN)
(72) Inventor: DAI, Yaya, Shenzhen, Guangdong 518129 (CN); HU, Feng, Shenzhen, Guangdong 518129 (CN); ZHANG, Tao, Shenzhen, Guangdong 518129 (CN); ZHAO, Yiquan, Shenzhen, Guangdong 518129 (CN)
(74) Representative: Körber, Martin Hans
(86) International application number: PCT/CN2017/104545
(87) International publication number: WO 2018/133452

(57) **Abstract**

Embodiments of the present invention disclose a web page rendering method and a related device. The method includes: After receiving a page loading request of a client, a server may obtain initial page content matching the page loading request and return the initial page content to the client, where the initial page content includes a front-end framework and at least one DOM. The client may load the at least one DOM based on the front-end framework; obtain, based on a feature attribute of each DOM, a page template and a page metadata that match the DOM; render the page metadata based on the page template to obtain an HTML segment of the DOM; and finally form an HTML page by using all HTML segments and display the HTML page. In the embodiments of the present invention, the client renders a page, so that in a high-concurrency scenario, hardware deployment costs of the server can be reduced, load of the server can be reduced, and memory overheads of the server can be reduced, thereby improving page rendering efficiency and system performance.

## Description

This application claims priority to Chinese Patent Application No. 201710042896.3, filed with the Chinese Patent Office on January 20, 2017, and entitled "WEB PAGE RENDERING METHOD AND RELATED DEVICE", which is incorporated herein by reference in its entirety.

### TECHNICAL FIELD

The present invention relates to the field of computer technologies, and specifically to a web page rendering method and a related device.

### BACKGROUND

With continuous development of front-end technologies, web pages have developed from only displaying information to allowing users to participate in generation of web page content, that is, allowing users to customize web pages. In general cases, when a user customizes a web page, modified page metadata is usually saved in a database, and when the web page is rendered, the page metadata is parsed and encrypted on a server, and rendered into a complete Hyper Text Mark-up Language (Hyper Text Mark-up Language, HTML) page, so that the HTML page is returned to a browser client for displaying. If a large quantity of pages simultaneously request rendering, the server needs to convert a large amount of metadata. In this case, not only rendering efficiency is decreased, but also memory overheads of the server are increased.

### SUMMARY

Embodiments of the present invention disclose a web page rendering method and a related device, to increase web page rendering efficiency and reduce memory overheads of a server in a high concurrency scenario.

A first aspect of the embodiments of the present invention provides a web page rendering method. The method may include the following steps:
After sending a page loading request to a server, a client may receive initial page content returned by the server based on the page loading request. The initial page content includes a front-end framework, for example, a UEE framework, and at least one document object model (Document Object Model, DOM). The client may load the at least one DOM based on the front-end framework; obtain, based on a feature attribute of each DOM, a page template and page metadata that match the DOM; then render, based on the page template matching the DOM, the page metadata matching the DOM, to obtain an HTML segment of the DOM; and form an HTML page by using HTML segments of the at least one DOM, and display the HTML page.

A page is rendered by the client, so that in a high concurrency scenario, hardware deployment costs of the server can be reduced, load of the server can be reduced, memory overheads of the server can be reduced, and page rendering efficiency and system performance can be increased.

Optionally, a specific manner of the loading, by the client, the at least one DOM based on the front-end framework may be:
loading, by the client, the at least one DOM to the front-end framework, and determining target DOMs, where the target DOMs are DOMs that are identified by the front-end framework from the at least one DOM; and
a specific manner of the obtaining, by the client based on a feature attribute of each DOM, a page template and page metadata that match the DOM may be:
   for each of the target DOMs, obtaining, by the client based on the feature attribute of the DOM, the page template and the page metadata that match the DOM.

Optionally, before the receiving, by a client after sending a page loading request to a server, initial page content returned by the server based on the page loading request, the method may further include:
displaying, by the client, a custom interface when receiving a page customization request; receiving a configuration operation of a user on the custom interface, to obtain page metadata generated by the configuration operation; establishing an association relationship between the page metadata and a first attribute of a DOM, and sending the page metadata to the server, so that the server saves the page metadata.

The client provides a visible custom interface, so that a page can be configured flexibly and efficiently, a user not familiar with technologies can also customize a product, a customization entry barrier is lowered, and a customization effect is improved, thereby reducing product re-customization development and maintenance costs to some extent.

Optionally, the feature attribute may specifically include a first attribute and a second attribute. The first attribute may be specifically a meta (meta) attribute, and the second attribute may be specifically a name attribute or other attributes such as a component-name attribute and a meta-id attribute. This is not limited in this embodiment of the present invention.

Then, a specific manner of the obtaining, by the client based on a feature attribute of each DOM, a page template and page metadata that match the DOM may include the following types:

### Manner 1

The initial page content may further include a page template and page metadata, and the client may search the initial page content for a page template matching a second attribute of each DOM and page metadata associated with a first attribute of the DOM. The page metadata and the page template are sent to the client together with the front-end framework and the DOM, information exchange between the client and the server can be reduced, page rendering efficiency can be increased, and running load on both sides of the client and the server can be reduced.

### Manner 2

The client sends a request message to the server, where the request message is used to request the page template and the page metadata of each DOM, and the request message includes a second attribute and a first attribute of the DOM. Then, the client receives a page template matching the second attribute and page metadata associated with the first attribute that are returned by the server based on the request message.

Optionally, the initial page content may further include only required page metadata. The client may search the initial page content for page metadata associated with the meta attribute of each DOM, and the page template is obtained only when the client sends a separate request message to the server.

For Manner 2, that the client sends a request message to the server may be understood as: 1. For each DOM, the client sends a first request message and a second request message to the server. The first request message is used to obtain a page template of the DOM, the first request message includes a second attribute of the DOM, the second request message is used to obtain page metadata of the DOM, and the second request message includes a first attribute of the DOM. 2. For each DOM, the client sends a request message to the server. The request message is used to obtain the page template and the page metadata of the DOM, and the request message includes the second attribute and the first attribute of the DOM. 3. For the page template, the client sends a request message to the server. The request message is used to obtain the page template of each of all DOMs identified by the front-end framework, and the request message includes the second attribute of each DOM. For the page metadata, the client sends another request message to the server. The request message is used to obtain the page metadata of each of all the DOMs identified by the front-end framework, and the request message includes the first attribute of each DOM. 4. For all DOMs identified by the front-end framework, the client sends a request message to the server. The request message is used to request the page template and the page metadata of each of all the DOMs, and the request message includes the second attribute and the first attribute of each of all the DOMs.

Therefore, after receiving the request message of the client, the server searches for the page metadata associated with the first attribute and the page template matching the second attribute respectively, and returns the page metadata and the page template to the client.

Optionally, after obtaining the page template, the client may further cache the page template locally, and when the page template needs to be obtained next time, the client may first perform searching locally to determine whether there is a corresponding page template. If there is a corresponding page template, the client may obtain the corresponding page template locally, or if there is no corresponding page template, the client needs to obtain the corresponding page template from the server. That is, the page template of each DOM obtained by the client may alternatively be obtained locally. The page template is cached locally, so that the page template does not need to be obtained from the server each time a page is rendered, information exchange between the client and the server can be reduced, page rendering efficiency can be increased, and running load on both sides of the client and the server can be reduced.

A second aspect of the embodiments of the present invention provides another web page rendering method. The method may include the following steps:

When receiving a page loading request sent by a client, a server may obtain initial page content matching the page loading request, and send the initial page content to the client. The initial page content includes a front-end framework and at least one DOM.

A page is rendered by the client, so that in a high concurrency scenario, hardware deployment costs of the server can be reduced, load of the server can be reduced, memory overheads of the server can be reduced, and page rendering efficiency and system performance can be increased.

Optionally, after the receiving, by a server, a page loading request sent by a client, the method may further include:
determining, by the server, current load, and when the load exceeds a preset load threshold, performing the operation of obtaining initial page content matching the page loading request.

Optionally, when the load does not exceed the preset load threshold, the server renders a page based on the page loading request to obtain source code of an HTML page, so that the server sends the source code to the client, and the client displays the HTML page based on the source code.

After receiving the page loading request of the client, the server may determine, with reference to a current load status, whether a page is rendered by the client side or by the server end. If the server is excessively loaded, the page is rendered by the client side, so that running load of the server can be reduced and page rendering efficiency can be increased. If the server is not heavily loaded, the page is rendered by the server end, so that running performance of the client side can be improved. In this way, the page is flexibly rendered and system performance is improved.

Optionally, a third aspect of the embodiments of the present invention discloses a client, which may include a processor, a transceiver, and an output apparatus and may be configured to perform the web page rendering method disclosed in the first aspect. A page is rendered by the client, so that in a high concurrency scenario, hardware deployment costs of the server can be reduced, load of the server can be reduced, memory overheads of the server can be reduced, and page rendering efficiency and system performance can be increased.

A fourth aspect of the embodiments of the present invention discloses another client, which may include a transceiver module, a loading module, an obtaining module, a rendering module, a display module, and an establishment module and may be configured to perform the web page rendering method disclosed in the first aspect. A physical device corresponding to the transceiver module may be the transceiver disclosed in the third aspect, physical devices corresponding to the loading module, the obtaining module, the rendering module, and the establishment module may be the processor disclosed in the third aspect, and a physical device corresponding to the display module may be the output apparatus disclosed in the third aspect. A page is rendered by the client, so that in a high concurrency scenario, hardware deployment costs of the server can be reduced, load of the server can be reduced, memory overheads of the server can be reduced, and page rendering efficiency and system performance can be increased.

A fifth aspect of the embodiments of the present invention discloses a server, which may include a processor, a transceiver, and a memory and may be configured to perform the web page rendering method disclosed in the second aspect. Therefore, a page is rendered by the client, so that in a high concurrency scenario, hardware deployment costs of the server can be reduced, load of the server can be reduced, memory overheads of the server can be reduced, and page rendering efficiency and system performance can be increased.

A sixth aspect of the embodiments of the present invention discloses another server, which may include a transceiver module, an obtaining module, a determining module, a rendering module, and a saving module and may be configured to perform the web page rendering method disclosed in the second aspect. A physical device corresponding to the transceiver module may be the transceiver disclosed in the fifth aspect, physical devices corresponding to the obtaining module, the determining module, and the rendering module may be the processor disclosed in the fifth aspect, and a physical device corresponding to the saving module may be the memory disclosed in the fifth aspect. A page is rendered by the client, so that in a high concurrency scenario, hardware deployment costs of the server can be reduced, load of the server can be reduced, memory overheads of the server can be reduced, and page rendering efficiency and system performance can be increased.

The following beneficial effects can be achieved through implementation of the embodiments of the present invention:

In the embodiments of the present invention, after receiving the page loading request of the client, the server may obtain the initial page content matching the page loading request and return the initial page content to the client, where the initial page content includes the front-end framework and the at least one DOM. Then, the client loads the at least one DOM based on the front-end framework; obtains, based on the feature attribute of each DOM, the page template and the page metadata matching the DOM; renders the page metadata based on the page template, to obtain the HTML segment of the DOM; and finally forms the HTML page by using all HTML segments and displays the HTML page. In the embodiments of the present invention, a page is rendered by the client, so that in a high concurrency scenario, hardware deployment costs of the server can be reduced, load of the server can be reduced, memory overheads of the server can be reduced, and page rendering efficiency and system performance can be increased.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of a web page rendering system disclosed in an embodiment of the present invention;
FIG. 2 is a schematic flowchart of a web page rendering method disclosed in an embodiment of the present invention;
FIG. 3 is a schematic flowchart of another web page rendering method disclosed in an embodiment of the present invention;
FIG. 4a is a first schematic diagram of a custom interface disclosed in an embodiment of the present invention;
FIG. 4b is a second schematic diagram of a custom interface disclosed in an embodiment of the present invention;
FIG. 4c is a third schematic diagram of a custom interface disclosed in an embodiment of the present invention;
FIG. 4d is a fourth schematic diagram of a custom interface disclosed in an embodiment of the present invention;
FIG. 4e is a fifth schematic diagram of a custom interface disclosed in an embodiment of the present invention;
FIG. 5 is a schematic structural diagram of a client disclosed in an embodiment of the present invention;
FIG. 6 is a schematic structural diagram of another client disclosed in an embodiment of the present invention;
FIG. 7 is a schematic structural diagram of a server disclosed in an embodiment of the present invention; and
FIG. 8 is a schematic structural diagram of another server disclosed in an embodiment of the present invention.

### DESCRIPTION OF EMBODIMENTS

The following describes the embodiments of the present invention with reference to accompanying drawings.

Embodiments of the present invention disclose a web page rendering method and a related device, to increase web page rendering efficiency and reduce memory overheads of a server in a high concurrency scenario. Detailed descriptions are separately provided below.

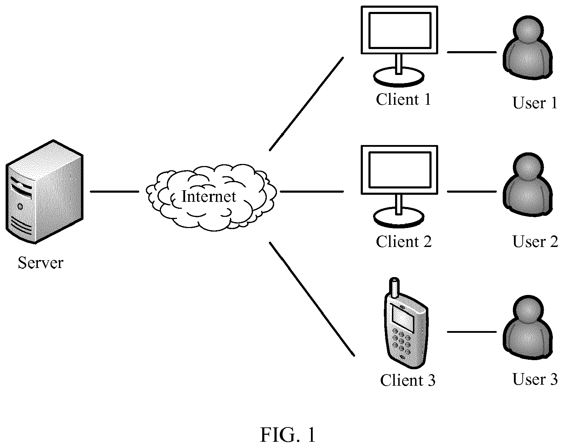

Referring to FIG. 1, FIG. 1 is a schematic structural diagram of a web page rendering system disclosed in an embodiment of the present invention. The system shown in FIG. 1 includes a server and at least one client. The server and the at least one client are connected by using Internet. The server may be an independent service device, or may be a cluster service device including a plurality of independent service devices. The server may provide a background service for a browser application (Application, APP). The client may be a browser application or may be a terminal device having a browser APP installed therein. The terminal device may include a smartphone, a tablet computer, a notebook computer, a desktop computer, an in-vehicle terminal, an intelligent wearable device, and the like. This is not limited in this embodiment of the present invention.

In the system described in FIG. 1, the client may send a page loading request to the server based on an operation of a user on a display interface, to display a corresponding HTML page. The server may store a plurality of types of page content, and may obtain corresponding page content based on the page loading request sent by the client and send the corresponding page content to the client; or may render a page based on the page loading request sent by the client and send an obtained HTML page to the client.

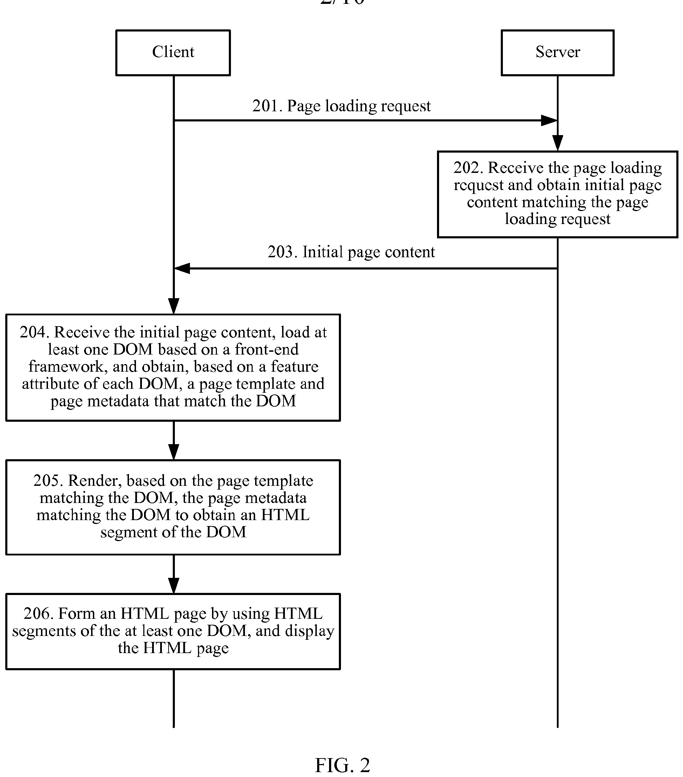

Based on the system shown in FIG. 1, an embodiment of the present invention discloses a web page rendering method. Referring to FIG. 2, FIG. 2 is a schematic flowchart diagram of a web page rendering method disclosed in an embodiment of the present invention. As shown in FIG. 2, the method may include the following steps.

201. A client sends a page loading request to a server.

In this embodiment of the present invention, the page loading request may be triggered by a user. For example, the user clicks a web page link, or enters a website in an address bar of a web page and clicks buttons such as "Enter" or "OK". After detecting the foregoing operations of the user, the client may generate the page loading request and send the page loading request to a background server.

202. The server receives the page loading request and obtains initial page content matching the page loading request.

In this embodiment of the present invention, the initial page content includes a front-end framework and at least one DOM. The front-end framework mainly includes the Internet experience-oriented World Wide Web, and is also referred to as a World Wide Web (World Wide Web, web) development framework, that is, a user experience environment (User Experience Environment, UEE) framework. The DOM may also be referred to as a page component. Such type of tags as <body> and <uee:gadget> may be referred to as a DOM.

It should be noted that the at least one DOM included in the initial page content may be an original DOM, or may be a DOM configured by the user. This is not limited in this embodiment of the present invention.

In this embodiment of the present invention, the page loading request carries a website of a web page that needs to be accessed, and the server stores the front-end framework and a plurality of DOMs that have a binding relationship with the website. Therefore, after receiving the page loading request sent by the client, the server may further obtain the initial page content matching the page loading request.

203. The server sends the initial page content to the client.

In this embodiment of the present invention, after obtaining the front-end framework and the at least one DOM that match the page loading request, the server may return the front-end framework and the at least one DOM to the client.

204. The client receives the initial page content, loads at least one DOM based on a front-end framework, and obtains, based on a feature attribute of each DOM, a page template and page metadata that match the DOM.

In this embodiment of the present invention, after obtaining the initial page content matching the page loading request, the server may send the initial page content to the client. Then, the client may receive the corresponding initial page content. Specifically, a UEE framework may be introduced by loading app.js to a script tag. After receiving the initial page content sent by the server, the client may further load the initial page content. Specifically, the client may load, based on the front-end framework included in the initial page content, the at least one DOM included in the initial page content.

Further, after receiving the initial page content, the client may further obtain, based on a feature attribute of each of the at least one DOM, the page template and the page metadata that match the DOM.

Specifically, a specific manner of the loading, by the client, the at least one DOM based on the front-end framework may be:
loading, by the client, the at least one DOM to the front-end framework, and determining target DOMs, where the target DOMs are DOMs that are identified by the front-end framework from the at least one DOM.

A specific manner of the obtaining, by the client based on a feature attribute of each DOM, a page template and page metadata that match the DOM may be:
for each of the target DOMs, obtaining, by the client based on the feature attribute of the DOM, the page template and the page metadata that match the DOM.

During specific implementation, the front-end framework may configure a location for the DOM. After obtaining the front-end framework and the DOM, the client loads each DOM to the corresponding location in the front-end framework, to form a page. When the client loads each DOM, the UEE framework monitors loading of each DOM. For example, the DOM is loaded by using the following sample code:
document.addeventListener('DOMContentLoaded',function() { ... } ,false)

If a currently loaded DOM is a DOM identified by the UEE framework, the client determines the DOM is a target DOM, and obtains a page framework and page metadata that match a feature attribute of the target DOM. If the currently loaded DOM is not a DOM identified by the UEE framework, the client may not respond.

Further, after each DOM is loaded, the page of the client sends DOMContentLoaded to a UEE engine, so that the UEE engine renders the page based on the obtained page template and page metadata.

It may be understood that, the client may first load DOMs to the front-end framework, and then obtain the page template and the page metadata of each DOM, or vice versa. Alternatively, the two steps may be simultaneously performed. This is not limited in this embodiment of the present invention.

205. The client renders, based on the page template matching the DOM, the page metadata matching the DOM to obtain an HTML segment of the DOM.

In this embodiment of the present invention, after page content is loaded and the page template and the page metadata that match each DOM are obtained, for each DOM, the client performs page rendering on the page metadata based on the page template, to obtain the HTML segment of the DOM. Specifically, the page template and the page metadata may be compiled to generate the HTML segment by using a rendering engine such as an AngularJS engine.

206. The client forms an HTML page by using HTML segments of the at least one DOM, and displays the HTML page.

In this embodiment of the present invention, the client generates a corresponding HTML segment for each DOM, and may form, after generating HTML segments of all DOMs, the HTML page by using the HTML segments, to display the HTML page on a display interface of the client.

It may be learned that in the method described in FIG. 2, after receiving the page loading request of the client, the server may obtain the initial page content matching the page loading request and return the initial page content to the client, where the initial page content includes the front-end framework and the at least one DOM. The client may load the at least one DOM based on the front-end framework; obtain, based on the feature attribute of each DOM, the page template and the page metadata matching the DOM; render the page metadata based on the page template to obtain the HTML segment of the DOM; and finally form the HTML page by using all HTML segments and display the HTML page. In the embodiments of the present invention, a page is rendered by the client, so that in a high concurrency scenario, hardware deployment costs of the server can be reduced, load of the server can be reduced, memory overheads of the server can be reduced, and page rendering efficiency and system performance can be increased.

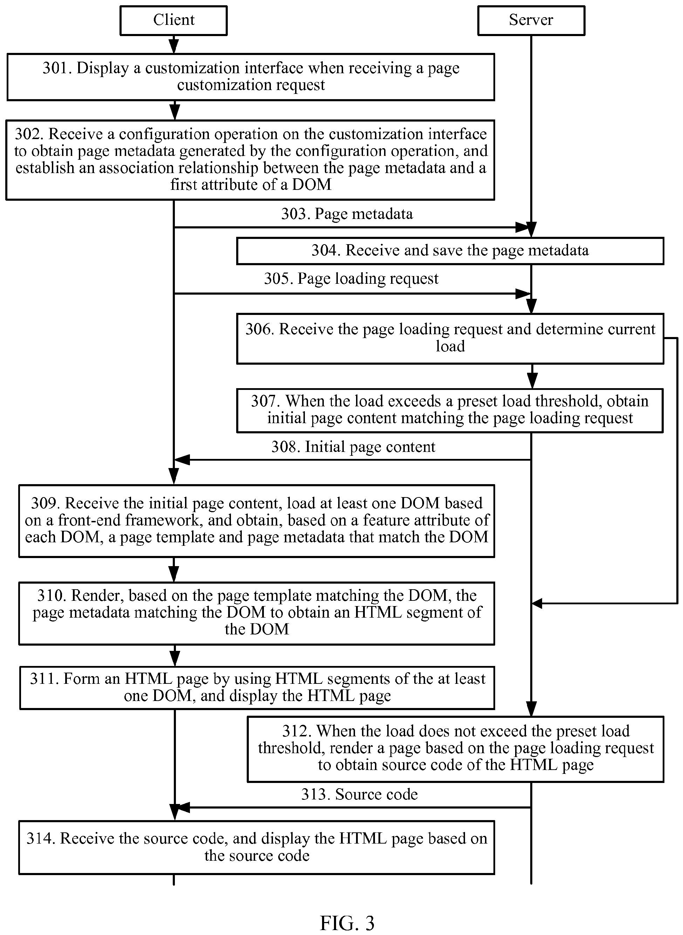

Based on the system shown in FIG. 1, an embodiment of the present invention discloses another web page rendering method. Referring to FIG. 3, FIG. 3 is a schematic flowchart diagram of another web page rendering method disclosed in an embodiment of the present invention. As shown in FIG. 3, the method may include the following steps.

301. A client displays a custom interface when receiving a page customization request.

In this embodiment of the present invention, the page customization request may be triggered by a user. For example, the user clicks a function button for page customization on a display interface of the client, so that the client generates the page customization request. Alternatively, the page customization request may be sent by another device or client. For example, the user triggers another client, and the another client generates the page customization request and sends the page customization request to the client. This is not limited in this embodiment of the present invention.

In this embodiment of the present invention, the client may further display the custom interface after receiving the page customization request. The custom interface may provide a function of page customization for the user, and the user may configure each customizable DOM on the custom interface, to change a display style of a web page.

302. The client receives a configuration operation on the custom interface to obtain page metadata generated by the configuration operation, and establishes an association relationship between the page metadata and a first attribute of a DOM.

In this embodiment of the present invention, after the client displays the custom interface, the user may perform a configuration operation on a customizable DOM on the custom interface, and the client may receive the configuration operation of the user and obtain page metadata generated by the configuration operation, to establish an association relationship between page metadata of each DOM and a first attribute of the DOM.

It may be understood that the custom interface may be a blank interface, and the user needs to configure a DOM that needs to be displayed on the page, for example, add a DOM that may be displayed on the page. The custom interface may alternatively be an original interface provided on a server end. The original interface includes attributes of some DOMs, that is, original page metadata. The user may perform a configuration operation such as modification, adding, and deleting on the original page metadata on the original interface. This is not limited in this embodiment of the present invention.

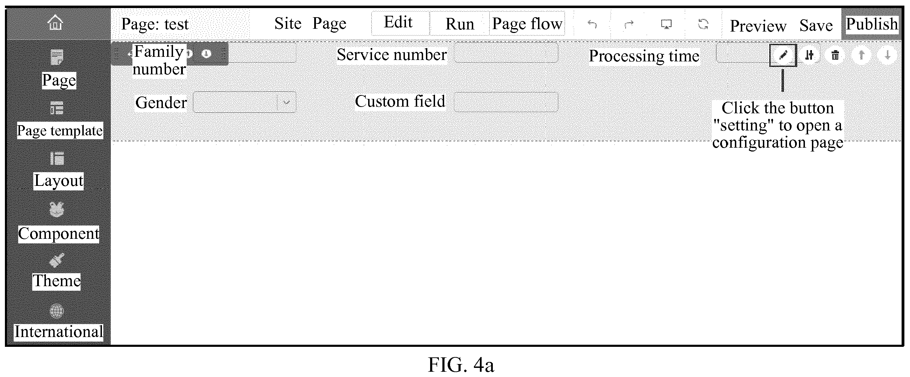

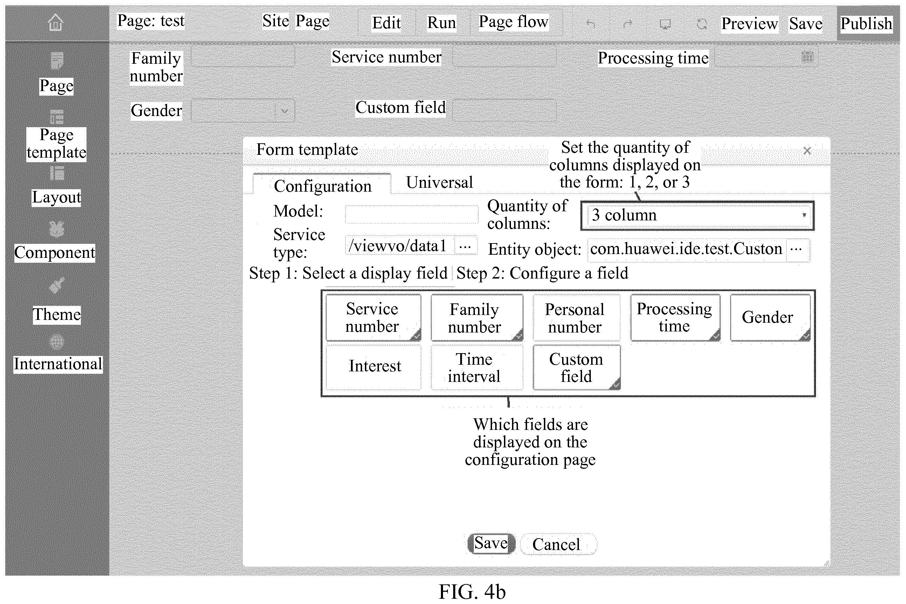

For example, a form template DOM is customized on a designer system. Referring to FIG. 4a to FIG. 4e, FIG. 4a shows an original interface provided by the server end. The original interface displays a customizable DOM and a non-customizable DOM. A user may move a mouse to a customizable DOM area, or may click a customizable DOM area in a touch control manner. In this way, the original interface displays a button "setting", the user clicks the button "setting" by using the mouse or in a touch control manner, so that the client may display a custom interface of the customizable DOM. The custom interface may be specifically displayed in a form of a pop-up window, or as shown in FIG. 4b, may be a new interface. This is not limited in this embodiment of the present invention.

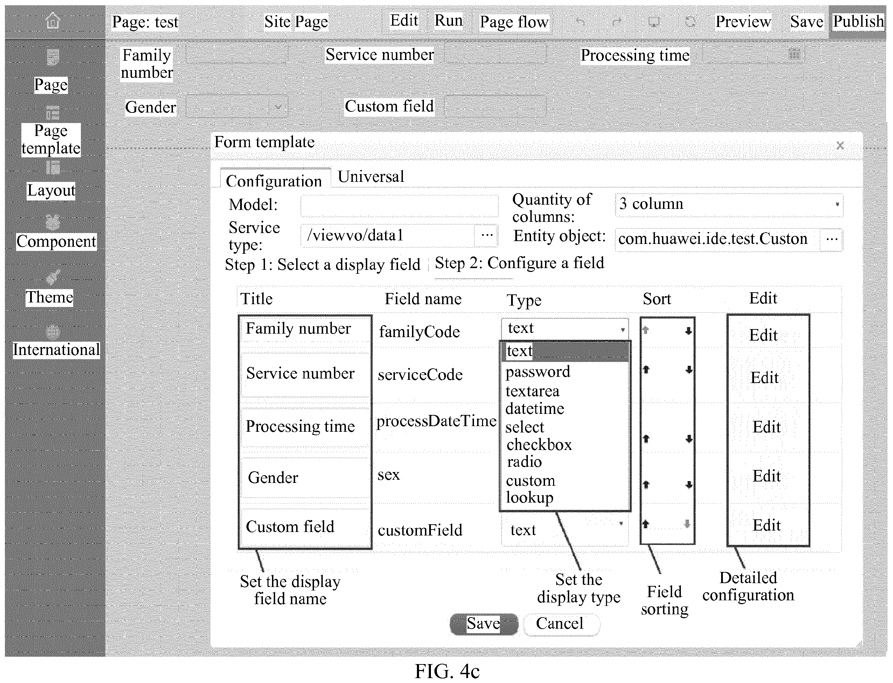

In FIG. 4b, the user may configure, on the custom interface, a quantity of columns displayed on the form. For example, three columns may be set. Alternatively, the user may configure, on the custom interface, a field displayed on the page. Specifically, a field that needs to be displayed may be selected from selectable fields. The selectable fields include a service number, a family number, a personal number, a processing time, interest, a time interval, and the like. After the field (the service number, the family number, the processing time, and a custom field) that needs to be displayed on the page is selected, the user may further configure a display field name, a field name, a display type, a display sequence, and the like of a title. Specifically, the configuration may be performed by the user in a form of a text box, an input box, a drop box, and the like. As shown in FIG. 4c, the configured interface is mainly in the form of a drop box, and is provided for the user to perform page configuration.

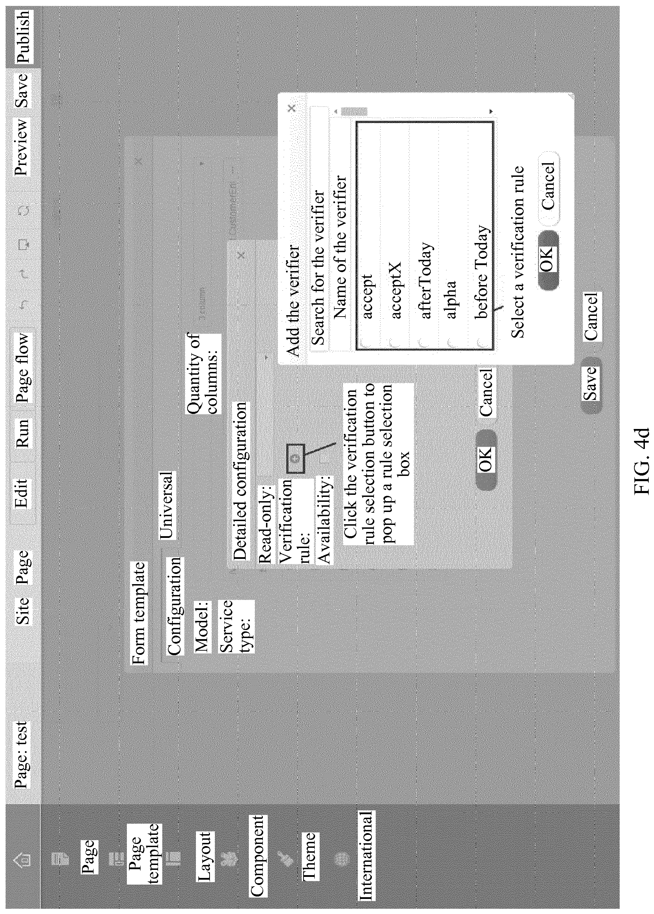

Further, in FIG. 4c, the custom interface may further display a function button with characters such as "Edit". When the user clicks the button "Edit", the page displays a more detailed custom interface. As shown in FIG. 4d, on the interface, the user may configure an attribute of a control button corresponding to each field, for example, read-only, write-only, and read-write. A verification rule of each control when content is input may also be configured. For example, when the user clicks a verification rule selection button, a verification rule selection box may be popped up, and the user only needs to select a required verification rule. In addition, availability of the control may further be configured, that is, whether the control needs to be displayed on the page. The description above is only an example, and specific implementations are not limited in this embodiment of the present invention.

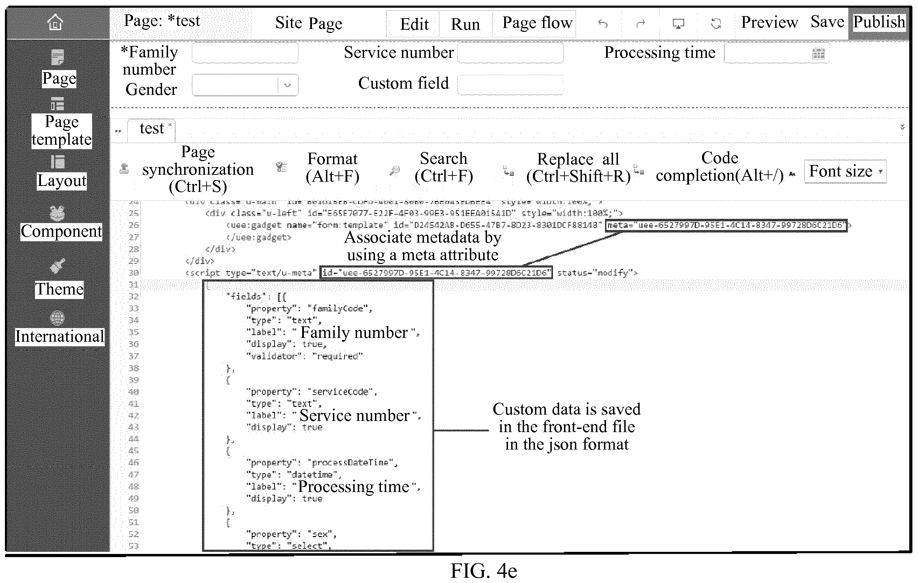

Further, after completing configuration, the user may click a button "save" on the custom interface. Then, the client saves, based on the configuration operation of the user, generated page metadata to a script tag on the current page, and establishes an association relationship between an identity (identity, ID) and a meta attribute (which may alternatively be understood as a meta value) of a custom DOM. As shown in FIG. 4e, meta of the DOM configured by the user = "uee-6527997D-95E1-4C14-8347-99728D6C21D6", and correspondingly, id of original data of the page generated by the configuration operation = "uee-6527997D-95E1-4C14-8347-99728D6C21D6". In this way, the page metadata is associated by using meta. In FIG. 4e, the page metadata generated by the configuration operation may be saved in a front-end file in a json format.

303. The client sends the page metadata to a server.

In this embodiment of the present invention, after obtaining the page metadata generated by the configuration operation of the user, the client may send the page metadata to the server. Specifically, the client may send the front-end file to the server.

304. The server receives and saves the page metadata.

In this embodiment of the present invention, after receiving the page metadata configured on the client side, the server may save the page metadata in a meta database of the server.

305. The client sends a page loading request to the server.

In this embodiment of the present invention, step 305 is the same as an implementation of step 201 in the previous embodiment. Details are not described again in this embodiment of the present invention. It may be understood that step 301 to step 304 may be performed before or after step 305. This is not limited in this embodiment of the present invention.

306. The server receives the page loading request and determines current load.

In this embodiment of the present invention, after receiving the page loading request of the client, the server may first determine the current load of the server. Specifically, the server may detect a memory running status of the server and/or a page loading request received in a same time segment and the like, to obtain load information, so that the server determines a current load status based on the load information.

Optionally, an external device may detect a running status of the server to obtain the load information of the server, and send the load information to the server, so that the server may determine the current load status based on the load information.

307. When the load exceeds a preset load threshold, the server obtains initial page content matching the page loading request.

In this embodiment of the present invention, to avoid a decrease in running performance of the server due to excessive load, the server may preset the load threshold. The preset load threshold may be 75% or 80%. This is not limited in this embodiment of the present invention. Therefore, when determining the current load, the server may determine whether the load exceeds the preset load threshold. If the load exceeds the preset load threshold, the server obtains the initial page content matching the page loading request and sends the initial page content to the client, and the client side renders a page. For details, refer to the implementation of step 202 in the previous embodiment, and details are not described again in this embodiment of the present invention.

308. The server sends the initial page content to the client.

309. The client receives the initial page content, loads at least one DOM based on a front-end framework, and obtains, based on a feature attribute of each DOM, a page template and page metadata that match the DOM.

In this embodiment of the present invention, specific implementations of step 308 and step 309 are the same as step 203 and step 204 in the previous embodiment. Details are not described again in this embodiment of the present invention.

Based on the configuration operation of the user on the custom interface, the feature attribute in this embodiment of the present invention may specifically include a first attribute and a second attribute. The first attribute may be specifically a meta attribute, and the second attribute may be specifically a name attribute or other attributes such as a component-name attribute and a meta-id attribute. This is not limited in this embodiment of the present invention. It may be understood that, when the server returns DOMs to the client, each DOM may carry a feature attribute of the DOM.

It should be noted that a specific manner of the obtaining, by the client based on a feature attribute of each DOM, a page template and page metadata that match the DOM may include the following types:

### Manner 1

The initial page content may further include a page template and page metadata, and the client may search the initial page content for a page template matching a second attribute of each DOM and page metadata associated with a first attribute of the DOM.

### Manner 2

The client sends a request message to the server, where the request message is used to request the page template and the page metadata of each DOM, and the request message includes a second attribute and a first attribute of the DOM. The server returns, based on the request message of the client, a page template matching the second attribute and page metadata associated with the first attribute to the client.

For Manner 1, after receiving the page loading request of the client and determining the front-end framework and the DOM that match the page loading request, the server may further obtain the page template and the page metadata that are required, and then send the page template and the page metadata to the client together with the front-end framework and the DOM as the initial page content. When the client needs to obtain the page template and the page metadata that correspond to each DOM, the initial page content may be searched for the associated page metadata and the matched page template respectively by using a meta attribute and a name attribute of the DOM. The page metadata and the page template are sent to the client together with the front-end framework and the DOM, information exchange between the client and the server can be reduced, page rendering efficiency can be increased, and running load on both sides of the client and the server can be reduced.

For example, the client may find a page template named as richtex in a template file folder by using the name attribute that is assumed as richtex and that is configured by the DOM, and may search, based on a meta attribute of uee: gadget, a meta database for metadata of a corresponding ID in.

Optionally, the initial page content may alternatively include only required page metadata. The client may search the initial page content for page metadata associated with the meta attribute of each DOM, and the page template is obtained only when the client sends a separate request message to the server.

For Manner 2, that the client sends a request message to the server may be understood as: 1. For each DOM, the client sends a first request message and a second request message to the server. The first request message is used to obtain a page template of the DOM, the first request message includes a second attribute of the DOM, the second request message is used to obtain page metadata of the DOM, and the second request message includes a first attribute of the DOM. 2. For each DOM, the client sends a request message to the server. The request message is used to obtain the page template and the page metadata of the DOM, and the request message includes the second attribute and the first attribute of the DOM. 3. For the page template, the client sends a request message to the server. The request message is used to obtain the page template of each of all DOMs identified by the front-end framework, and the request message includes the second attribute of each DOM. For the page metadata, the client sends another request message to the server. The request message is used to obtain the page metadata of each of all the DOMs identified by the front-end framework, and the request message includes the first attribute of each DOM. 4. For all DOMs identified by the front-end framework, the client sends a request message to the server. The request message is used to request the page template and the page metadata of each of all the DOMs, and the request message includes the second attribute and the first attribute of each of all the DOMs.

Therefore, after receiving the request message of the client, the server searches for the page metadata associated with the first attribute and the page template matching the second attribute respectively, and returns the page metadata and the page template to the client.

In conclusion, the client may obtain the page metadata and the page template of the DOM in a manner below: The initial page content returned by the server includes the corresponding page template and page metadata, and the client directly obtains the page template and the page metadata of each DOM from the initial page content. Alternatively, the client sends the request message to the server to obtain the page template and the page metadata of each DOM. Specifically, the client sends a request message to the server for each DOM, or sends a request message to the server for all DOMs identified by the front-end framework, or sends different request messages for the page metadata and the page template of each DOM, or sends different request messages for page metadata and page templates of all DOMs identified by the front-end framework. This is not limited in this embodiment of the present invention.

Optionally, after obtaining the page template, the client may further cache the page template locally, and when the page template needs to be obtained next time, the client may first perform searching locally to determine whether there is a corresponding page template. If there is a corresponding page template, the client may obtain the corresponding page template locally, or if there is no corresponding page template, the client needs to obtain the corresponding page template from the server. That is, the page template of each DOM obtained by the client may alternatively be obtained locally. The page template is cached locally, so that the page template does not need to be obtained from the server each time a page is rendered, information exchange between the client and the server can be reduced, page rendering efficiency can be increased, and running load on both sides of the client and the server can be reduced.

It should be noted that different page loading requests may require a same DOM, and the client may prestore or cache a page template of a commonly-used DOM. Therefore, the page template may be obtained locally as required. In this way, information exchange does not need to be frequently performed between the server and the client, and load of the server is reduced, thereby improving obtaining efficiency of the page template.

310. The client renders, based on the page template matching the DOM, the page metadata matching the DOM to obtain an HTML segment of the DOM.

For example, the client may compile, by using an AngularJS, the page template and the page metadata of uee: gadget named as richtex, to generate the HTML segment.

311. The client forms an HTML page by using HTML segments of the at least one DOM, and displays the HTML page.

In this embodiment of the present invention, specific implementations of step 310 and step 311 are the same as step 205 and step 206 in the previous embodiment. Details are not described again in this embodiment of the present invention.

312. When the load does not exceed the preset load threshold, the server renders a page based on the page loading request to obtain source code of an HTML page.

313. The server sends the source code to the client.

In this embodiment of the present invention, after the server determines a current load status, if the server determines that the load does not exceed the preset load threshold, the page may be rendered on the server side. That is, the server renders the page based on the page loading request, to obtain the source code of the HTML page and send the source code of the HTML page to the client.

314. The client receives the source code, and displays the HTML page based on the source code.

In this embodiment of the present invention, after receiving the source code of the HTML page sent by the server side, the client may directly display the HTML page based on the source code. Running pressure on the client side can be reduced to some extent, and system performance can be improved.

It may be understood that step 307 to step 311 and step 312 to step 314 are of a parallel relationship. When the current load of the server exceeds the preset load threshold, step 307 to step 312 are performed, or when the current load of the server does not exceed the preset load threshold, step 312 to step 314 may be performed. This is not limited in this embodiment of the present invention.

It can be learned that in the method described in FIG. 3, after receiving the page loading request of the client, the server may determine, with reference to a current load status, whether a page is rendered by the client side or by the server end. If the server is excessively loaded, the page is rendered by the client side, so that running load of the server can be reduced and page rendering efficiency can be increased. If the server is not heavily loaded, the page is rendered by the server end, so that running performance of the client side can be improved. In this way, the page is flexibly rendered and system performance is improved. Further, the client provides a visible custom interface, so that a page can be configured flexibly and efficiently, a user not familiar with technologies can also customize a product, a customization entry barrier is lowered, and a customization effect is improved, thereby reducing product re-customization development and maintenance costs to some extent.

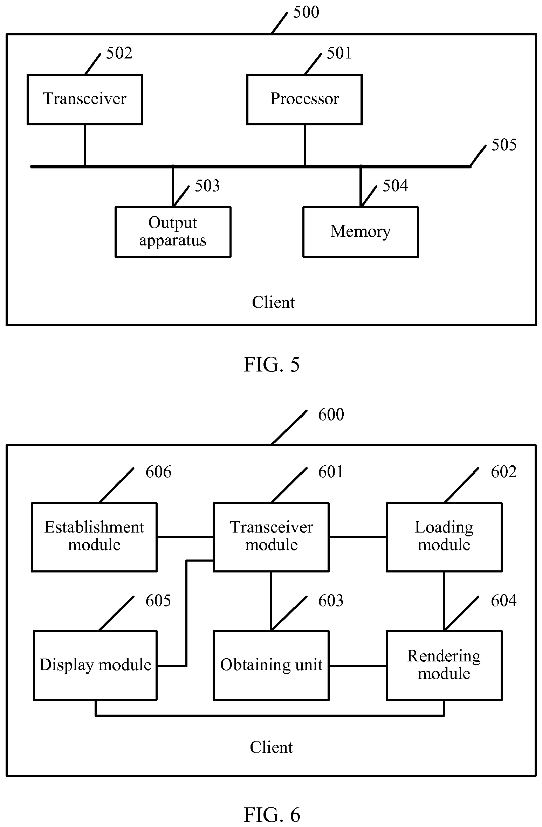

Based on the system shown in FIG. 1, an embodiment of the present invention discloses a client. Referring to FIG. 5, FIG. 5 is a schematic structural diagram of the client disclosed in this embodiment of the present invention. The client described in FIG. 5 may include at least one processor 501 such as a central processing unit (Central Processing Unit, CPU), a transceiver 502, an output apparatus 503, a memory 504, and at least one communications bus 505. The processor 501, the transceiver 502, the output apparatus 503, and the memory 504 are connected by using the bus 505.

The output apparatus 503 may be specifically a display screen of the client 500, and is configured to output a display interface such as a custom interface.

The memory 504 may be a high-speed RAM memory, or may be a non-volatile memory (non-volatile memory) such as a magnetic disk memory. Optionally, the memory 504 may alternatively be at least one storage apparatus located in the processor.

The memory 504 is configured to store a group of program code, and the processor 501, the transceiver 502, and the output apparatus 503 are configured to invoke the program code stored in the memory 504 to perform the following operations:

The transceiver 502 is configured to receive, after sending a page loading request to a server, initial page content returned by the server based on the page loading request, where the initial page content includes a front-end framework such as a UEE framework, and at least one DOM.

The processor 501 is configured to: load the at least one DOM based on the front-end framework; and obtain, based on a feature attribute of each DOM, a page template and page metadata that match the DOM.

The processor 501 is further configured to render, based on the page template matching the DOM, the page metadata matching the DOM to obtain an HTML segment of the DOM.

The output apparatus 503 is configured to: form an HTML page by using HTML segments of the at least one DOM, and display the HTML page.

In a feasible implementation, a specific manner of the loading, by the processor 501, the at least one DOM based on the front-end framework may be:
loading the at least one DOM to the front-end framework, and determining target DOMs, where the target DOMs are DOMs that are identified by the front-end framework from the at least one DOM.

A specific manner of the obtaining, by the processor 501 based on a feature attribute of each DOM, a page template and page metadata that match the DOM may be:
for each of the target DOMs, obtaining, based on the feature attribute of the DOM, the page template and the page metadata that match the DOM.

In another feasible implementation, the output apparatus 503 is further configured to display a custom interface when the transceiver 502 receives a page customization request.

The transceiver 502 is further configured to receive a configuration operation on the custom interface to obtain page metadata generated by the configuration operation. The configuration operation may be triggered by a user.

The processor 501 is further configured to establish an association relationship between the page metadata and a first attribute of a DOM. Specifically, an association relationship is established by binding an ID with the first attribute (a meta value).

The transceiver 502 is further configured to send the page metadata to the server, so that the server saves the page metadata.

In still another feasible implementation, the feature attribute may specifically include a first attribute and a second attribute. The first attribute may be specifically a meta attribute, and the second attribute may be specifically a name attribute or other attributes such as a component-name attribute and a meta-id attribute. This is not limited in this embodiment of the present invention. It may be understood that, when the server returns DOMs to the client 500, each DOM may carry a feature attribute of the DOM.

Therefore, a specific manner of the obtaining, by the processor 501 based on a feature attribute of each DOM, a page template and page metadata that match the DOM may include the following types:

### Manner 1

The initial page content may further include a page template and page metadata, so that the processor 501 may search the initial page content for a page template matching a second attribute of each DOM and page metadata associated with a first attribute of the DOM.

### Manner 2

The processor 501 sends a request message to the server by using the transceiver 502, where the request message is used to request the page template and the page metadata of each DOM, and the request message includes a second attribute and a first attribute of the DOM. The transceiver 502 receives a page template matching the second attribute and page metadata associated with the first attribute that are returned by the server based on the request message.

Optionally, the initial page content may further include only required page metadata. The processor 501 may search the initial page content for page metadata associated with the meta attribute of each DOM, and the page template is obtained only when the client 500 sends a separate request message to the server.

For Manner 2, that the processor 501 sends a request message to the server by using the transceiver 502 may be understood as: 1. For each DOM, the transceiver 502 sends a first request message and a second request message to the server. The first request message is used to obtain a page template of the DOM, the first request message includes a second attribute of the DOM, the second request message is used to obtain page metadata of the DOM, and the second request message includes a first attribute of the DOM. 2. For each DOM, the transceiver 502 sends a request message to the server, the request message is used to obtain the page template and the page metadata of the DOM, and the request message includes the second attribute and the first attribute of the DOM. 3. For the page template, the transceiver 502 sends a request message to the server. The request message is used to obtain the page template of each DOM in all DOMs identified by the front-end framework, and the request message includes the second attribute of each DOM. For the page metadata, the transceiver 502 sends another request message to the server. The request message is used to obtain the page metadata of each DOM in all the DOMs identified by the front-end framework, and the request message includes the first attribute of each DOM. 4. For all DOMs identified by the front-end framework, the transceiver 502 sends a request message to the server. The request message is used to request the page template and the page metadata of each of all the DOMs, and the request message includes the second attribute and the first attribute of each of all the DOMs.

Therefore, after receiving the request message of the client 500, the server searches for the page metadata associated with the first attribute and the page template matching the second attribute respectively, and returns the page metadata and the page template to the client 500.

Optionally, after obtaining the page template, the processor 501 may further cache the page template locally by using the memory 504, and when the page template needs to be obtained next time, the processor 501 may first perform searching locally to determine whether there is a corresponding page template. If there is a corresponding page template, the processor 501 may obtain the corresponding page template locally, or if there is no corresponding page template, the processor 501 needs to obtain the corresponding page template from the server. That is, the page template of each DOM obtained by the processor 501 may alternatively be obtained locally.

It should be noted that different page loading requests may require a same DOM, and the processor 501 may pre-store or cache a page template of a commonly-used DOM. Therefore, the page template may be obtained locally as required. In this way, information exchange does not need to be frequently performed between the server and the client, and load of the server is reduced, thereby improving obtaining efficiency of the page template.

Referring to FIG. 6, FIG. 6 is a schematic structural diagram of another client disclosed in an embodiment of the present invention. As shown in FIG. 6, the client 600 may include:
a transceiver module 601, configured to receive, after sending a page loading request to a server, initial page content returned by the server based on the page loading request, where the initial page content includes a front-end framework such as a UEE framework, and at least one DOM;
a loading module 602, configured to load the at least one DOM based on the front-end framework;
an obtaining unit 603, configured to obtain, based on a feature attribute of each DOM, a page template and page metadata that match the DOM;
a rendering module 604, configured to render, based on the page template matching the DOM, the page metadata matching the DOM, to obtain an HTML segment of the DOM; and
a display module 605, configured to: form an HTML page by using HTML segments of the at least one DOM, and display the HTML page.

In a feasible implementation, a specific manner of the loading, by the loading module 602, the at least one DOM based on the front-end framework may be:
loading the at least one DOM to the front-end framework, and determining target DOMs, where the target DOMs are DOMs that are identified by the front-end framework from the at least one DOM.

A specific manner of the obtaining, by the obtaining module 603 based on a feature attribute of each DOM, a page template and page metadata that match the DOM may be:
for each of the target DOMs, obtaining, based on the feature attribute of the DOM, the page template and the page metadata that match the DOM.

In another feasible implementation, the client 600 may further include an establishment module 606.

The display module 605 is further configured to display a custom interface when the transceiver module 601 receives a page customization request.

The transceiver module 601 is further configured to receive a configuration operation on the custom interface to obtain page metadata generated by the configuration operation. The configuration operation may be triggered by a user.

The establishment module 606 is configured to establish an association relationship between the page metadata and a first attribute of a DOM. Specifically, an association relationship is established by binding an ID with the first attribute (a meta value).

The transceiver module 601 is further configured to send the page metadata to the server, so that the server saves the page metadata.

In still another feasible implementation, the feature attribute may specifically include a first attribute and a second attribute. The first attribute may be specifically a meta attribute, and the second attribute may be specifically a name attribute or other attributes such as a component-name attribute and a meta-id attribute. This is not limited in this embodiment of the present invention. It may be understood that, when the server returns DOMs to the client 600, each DOM may carry a feature attribute of the DOM.

Therefore, a specific manner of the obtaining, by the obtaining module 603 based on a feature attribute of each DOM, a page template and page metadata that match the DOM may include the following types:

### Manner 1

The initial page content may further include a page template and page metadata, so that the obtaining module 603 may search the initial page content for a page template matching a second attribute of each DOM and page metadata associated with a first attribute of the DOM.

### Manner 2

The obtaining module 603 sends a request message to the server by using the transceiver module 601, where the request message is used to request the page template and the page metadata of each DOM, and the request message includes a second attribute and a first attribute of the DOM. The transceiver module 601 receives a page template matching the second attribute and page metadata associated with the first attribute that are returned by the server based on the request message.

Optionally, the initial page content may alternatively include only required page metadata. The obtaining module 603 may search the initial page content for page metadata associated with the meta attribute of each DOM, and the page template is obtained only when the client 600 sends a separate request message to the server.

For Manner 2, that the obtaining module 603 sends a request message to the server by using the transceiver module 601 may be understood as: 1. For each DOM, the transceiver module 601 sends a first request message and a second request message to the server. The first request message is used to obtain a page template of the DOM, the first request message includes a second attribute of the DOM, the second request message is used to obtain page metadata of the DOM, and the second request message includes a first attribute of the DOM. 2. For each DOM, the transceiver module 601 sends a request message to the server. The request message is used to obtain the page template and the page metadata of the DOM, and the request message includes the second attribute and the first attribute of the DOM. 3. For the page template, the transceiver module 601 sends a request message to the server. The request message is used to obtain the page template of each of all DOMs identified by the front-end framework, and the request message includes the second attribute of each DOM. For the page metadata, the transceiver module 601 sends another request message to the server. The request message is used to obtain the page metadata of each of all the DOMs identified by the front-end framework, and the request message includes the first attribute of each DOM. 4. For all DOMs identified by the front-end framework, the transceiver module 601 sends a request message to the server. The request message is used to request the page template and the page metadata of each of all the DOMs, and the request message includes the second attribute and the first attribute of each of all the DOMs.

Therefore, after receiving the request message of the client 600, the server searches for the page metadata associated with the first attribute and the page template matching the second attribute respectively, and returns the page metadata and the page template to the client 600.

Optionally, after obtaining the page template, the obtaining module 603 may further cache the page template locally, and when the page template needs to be obtained next time, the obtaining module 603 may first perform searching locally to determine whether there is a corresponding page template. If there is a corresponding page template, the obtaining module 603 may obtain the corresponding page template locally, or if there is no corresponding page template, the obtaining module 603 needs to obtain the corresponding page template from the server. That is, the page template of each DOM obtained by the obtaining module 603 may alternatively be obtained locally.

It should be noted that different page loading requests may require a same DOM, and the obtaining module 603 may pre-store or cache a page template of a commonly-used DOM. Therefore, the page template may be obtained locally as required. In this way, information exchange does not need to be frequently performed between the server and the client, and load of the server is reduced, thereby improving obtaining efficiency of the page template.

It can be learned that in the client described in FIG. 5 and FIG. 6, after sending the page loading request to the server, the client receives the initial page content returned by the server. The initial page content includes the front-end framework and the at least one DOM. The client loads the at least one DOM based on the front-end framework; obtains, based on the feature attribute of each DOM, the page template and the page metadata matching the DOM; renders the page metadata based on the page template to obtain the HTML segment of the DOM; and finally forms the HTML page by using the HTML segment and displays the HTML page. In the embodiments of the present invention, a page is rendered by the client, so that in a high concurrency scenario, hardware deployment costs of the server can be reduced, load of the server can be reduced, memory overheads of the server can be reduced, and page rendering efficiency and system performance can be increased. Further, after receiving the page loading request of the client, the server may determine, with reference to a current load status, whether the page is rendered by the client side or by the server end. If the server is excessively loaded, the page is rendered by the client side, so that running load of the server can be reduced and page rendering efficiency can be increased. If the server is not heavily loaded, the page is rendered by the server end, so that running performance of the client side can be improved. In this way, the page is flexibly rendered and system performance is improved. Further, the client may provide a visible custom interface, so that a page can be configured flexibly and efficiently, a user not familiar with technologies can also customize a product, a customization entry barrier is lowered, and a customization effect is improved, thereby reducing product re-customization development and maintenance costs to some extent.

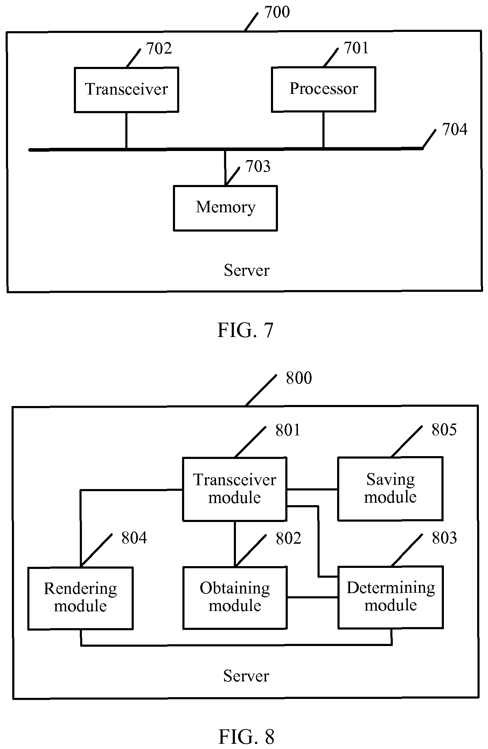

Based on the system shown in FIG. 1, an embodiment of the present invention discloses a server. Referring to FIG. 7, FIG. 7 is a schematic structural diagram of the server disclosed in this embodiment of the present invention. The server described in FIG. 7 may include: at least one processor 701 such as a CPU, a transceiver 702, a memory 704, and at least one communications bus 704. The processor 701, the transceiver 702, and the memory 703 are connected by using the bus 704.

The memory 703 may be a high-speed RAM memory, or may be a non-volatile memory (non-volatile memory) such as a magnetic disk memory. Optionally, the memory 703 may alternatively be at least one storage apparatus located in the processor.

The memory 703 is configured to store a group of program code, the processor 701 and the transceiver 702 are configured to invoke the program code stored in the memory 703 to perform the following operations:

The transceiver 702 is configured to receive a page loading request sent by a client.

The processor 701 is configured to obtain initial page content matching the page loading request, where the initial page content includes a front-end framework and at least one DOM.

The transceiver 702 is further configured to send the initial page content to the client.

In a feasible implementation, the processor 701 is further configured to: determine current load of the server 700 after the transceiver 702 receives the page loading request sent by the client, and when the load exceeds a preset load threshold, perform the operation of obtaining initial page content matching the page loading request.

In another feasible implementation, the processor 701 is further configured to: when the load does not exceed the preset load threshold, render a page based on the page loading request to obtain source code of an HTML page.

The transceiver 702 is further configured to send the source code to the client, and the client displays the HTML page based on the source code.

In still another feasible implementation, the transceiver 702 is further configured to receive page metadata sent by the client.

The memory 703 is configured to save the page metadata. The page metadata may be specifically data generated after a user configures a page.

In still another feasible implementation, when the transceiver 702 sends the initial page content to the client, the initial page content may further include a page template and page metadata. In this way, the client may search the initial page content for the page target and the page metadata that match each DOM. or

The transceiver 702 is further configured to receive a request message sent by the client, where the request message is used to request a page template and the page metadata of each DOM, and the request message includes a second attribute and a first attribute of the DOM.

The transceiver 702 is further configured to return, based on the request message, a page template matching the second attribute and the page metadata associated with the first attribute to the client.

Referring to FIG. 8, FIG. 8 is a schematic structural diagram of another server disclosed in an embodiment of the present invention. As is shown in FIG. 8, the server 800 may include:
a transceiver module 801, configured to receive a page loading request sent by a client; and
an obtaining module 802, configured to obtain initial page content matching the page loading request, where the initial page content includes a front-end framework and at least one DOM.

The transceiver module 801 is further configured to send the initial page content to the client.

In a feasible implementation, the server 800 may further include:
a determining module 803, configured to: determine current load of the server 800 after the transceiver module 801 receives the page loading request sent by the client, and when the load exceeds a preset load threshold, trigger the obtaining module 802 to perform the operation of obtaining initial page content matching the page loading request.

In another feasible implementation, the server 800 may further include a rendering module 804.

The rendering module 804 is configured to: when the load does not exceed the preset load threshold, render a page based on the page loading request to obtain source code of an HTML page.

The transceiver module 801 is further configured to send the source code to the client, and the client displays the HTML page based on the source code.

In still another feasible implementation, the server 800 may further include a saving module 805.

The transceiver module 801 is configured to receive page metadata sent by the client.

The saving module 805 is configured to save the page metadata. The page metadata may be specifically data generated after a user configures a page.

In still another feasible implementation, when the transceiver module 801 sends the initial page content to the client, the initial page content may further include a page template and page metadata. In this way, the client may search the initial page content for the page target and the page metadata that match each DOM. or

The transceiver module 801 is further configured to receive a request message sent by the client, where the request message is used to request the page template and the page metadata of each DOM, and the request message includes a second attribute and a first attribute of the DOM.

The transceiver module 601 is further configured to return, based on the request message, a page template matching the second attribute and the page metadata associated with the first attribute to the client.

It may be learned that in the server described in the FIG. 7 and FIG. 8, after receiving the page loading request of the client, the server may obtain the initial page content matching the page loading request and return the initial page content to the client, where the initial page content includes the front-end framework and the at least one DOM. The client may load the at least one DOM based on the front-end framework; obtain, based on the feature attribute of each DOM, the page template and the page metadata matching the DOM; render the page metadata based on the page template, to obtain the HTML segment of the DOM; and finally form the HTML page by using all HTML segments and display the HTML page. In the embodiments of the present invention, a page is rendered by the client, so that in a high concurrency scenario, hardware deployment costs of the server can be reduced, load of the server can be reduced, memory overheads of the server can be reduced, and page rendering efficiency and system performance can be increased. Further, after receiving the page loading request of the client, the server may determine, with reference to a current load status, whether the page is rendered by the client side or by the server end. If the server is excessively loaded, the page is rendered by the client side, so that running load of the server can be reduced and page rendering efficiency can be increased. If the server is not heavily loaded, the page is rendered by the server end, so that running performance of the client side can be improved. In this way, the page is flexibly rendered and system performance is improved. Further, the client may provide a visible custom interface, so that a page can be configured flexibly and efficiently, a user not familiar with technologies can also customize a product, a customization entry barrier is lowered, and a customization effect is improved, thereby reducing product re-customization development and maintenance costs to some extent.

It should be noted that, in the foregoing embodiments, the description of each embodiment has respective focuses. For a part that is not described in detail in an embodiment, reference may be made to related descriptions in other embodiments. In addition, a person skilled in the art should understand that, actions and modules in the specification are not necessary for the present invention.

A sequence of the steps of the method in the embodiments of the present invention may be adjusted, and certain steps may also be combined or removed according to an actual requirement.

Modules in the client and the server in the embodiments of the present invention may be combined, divided, and deleted according to an actual requirement.

The client and the server in the embodiments of the present invention may be implemented by using a universal integrated circuit such as a CPU (Central Processing Unit, central processing unit), or implemented by using an ASIC (Application-Specific Integrated Circuit, application-specific integrated circuit).

A person of ordinary skill in the art may understand that all or a part of the processes of the methods in the embodiments may be implemented by a computer program instructing relevant hardware. The program may be stored in a computer readable storage medium. When the program runs, the processes of the methods in the embodiments are performed. The foregoing storage medium may be a magnetic disk, an optical disc, a read-only memory (Read-Only Memory, ROM), a random access memory (Random Access Memory, RAM), or the like.

The web page rendering method and the related device disclosed in the embodiments of the present invention are described in detail above. The principle and implementations of the present invention are described in the specification by using specific examples. The description about the embodiments of the present invention is merely provided to help understand the present invention and core ideas of the present invention. In addition, a person of ordinary skill in the art can make variations and modifications to the present invention in terms of the specific implementations and application scopes according to the ideas of the present invention. In conclusion, the content of the specification shall not be construed as a limitation on the present invention.

## Claims

1. A web page rendering method, comprising:
receiving, by a client after sending a page loading request to a server, initial page content returned by the server based on the page loading request, wherein the initial page content comprises a front-end framework and at least one document object model, DOM;
loading, by the client, the at least one DOM based on the front-end framework, and obtaining, based on a feature attribute of each DOM, a page template and page metadata that match the DOM;
rendering, by the client based on the page template matching the DOM, the page metadata matching the DOM, to obtain a Hyper Text Mark-up Language, HTML, segment of the DOM; and
forming, by the client, an HTML page by using HTML segments of the at least one DOM, and displaying the HTML page.

2. The method according to claim 1, wherein the loading, by the client, the at least one DOM based on the front-end framework comprises:
loading, by the client, the at least one DOM to the front-end framework, and determining target DOMs, wherein the target DOMs are DOMs that are identified by the front-end framework from the at least one DOM; and
the obtaining, by the client based on a feature attribute of each DOM, a page template and page metadata that match the DOM comprises:
for each of the target DOMs, obtaining, by the client based on the feature attribute of the DOM, the page template and the page metadata that match the DOM.

3. The method according to claim 1 or 2, wherein before the receiving, by a client after sending a page loading request to a server, initial page content returned by the server based on the page loading request, the method further comprises:
displaying, by the client, a custom interface when receiving a page customization request;
receiving, by the client, a configuration operation on the custom interface to obtain page metadata generated by the configuration operation; and
establishing, by the client, an association relationship between the page metadata and a first attribute of a DOM, and sending the page metadata to the server, so that the server saves the page metadata.

4. The method according to claim 3, wherein the feature attribute comprises a second attribute and the first attribute, and the initial page content further comprises a page module and the page metadata; and
the obtaining, by the client based on a feature attribute of each DOM, a page template and page metadata that match the DOM comprises:
searching, by the client, the initial page content for a page template matching the second attribute of each DOM and the page metadata associated with the first attribute of the DOM.

5. The method according to claim 3, wherein the feature attribute comprises a second attribute and the first attribute, and the obtaining, by the client based on a feature attribute of each DOM, a page template and page metadata that match the DOM comprises:
sending, by the client, a request message to the server, wherein the request message is used to request the page template and the page metadata of each DOM, and the request message comprises the second attribute and the first attribute of the DOM; and
receiving, by the client, a page template matching the second attribute and the page metadata associated with the first attribute that are returned by the server based on the request message.

6. A web page rendering method, comprising:
receiving, by a server, a page loading request sent by a client;
obtaining, by the server, initial page content matching the page loading request, wherein the initial page content comprises a front-end framework and at least one DOM; and
sending, by the server, the initial page content to the client.

7. The method according to claim 6, wherein after the receiving, by a server, a page loading request sent by a client, the method further comprises:
determining, by the server, current load, and when the load exceeds a preset load threshold, performing the operation of obtaining initial page content matching the page loading request.

8. The method according to claim 7, wherein the method further comprises:
when the load does not exceed the preset load threshold, rendering, by the server, a page based on the page loading request to obtain source code of an HTML page; and
sending, by the server, the source code to the client, and displaying, by the client, the HTML page based on the source code.

9. The method according to any one of claims 6 to 8, wherein before the receiving, by a server, a page loading request sent by a client, the method further comprises:
receiving, by the server, page metadata sent by the client, and saving the page metadata.

10. The method according to any one of claims 6 to 8, wherein the initial page content further comprises a page template and page metadata;
after the sending, by the server, the initial page content to the client, the method further comprises:
receiving, by the server, a request message sent by the client, wherein the request message is used to request a page template and page metadata of each DOM, and the request message comprises a second attribute and a first attribute of the DOM; and
returning, by the server based on the request message, a page template matching the second attribute and page metadata associated with the first attribute to the client.

11. A client, comprising:
a transceiver module, configured to receive, after sending a page loading request to a server, initial page content returned by the server based on the page loading request, wherein the initial page content comprises a front-end framework and at least one DOM;
a loading module, configured to load the at least one DOM based on the front-end framework;
an obtaining module, configured to obtain, based on a feature attribute of each DOM, a page template and page metadata that match the DOM;
a rendering module, configured to render, based on the page template matching the DOM, the page metadata matching the DOM, to obtain an HTML segment of the DOM; and
a display module, configured to: form an HTML page by using HTML segments of the at least one DOM, and display the HTML page.

12. The client according to claim 11, wherein a specific manner of the loading, by the loading module, the at least one DOM based on the front-end framework is:
loading the at least one DOM to the front-end framework, and determining target DOMs, wherein the target DOMs are DOMs that are identified by the front-end framework from the at least one DOM; and
a specific manner of the obtaining, by the obtaining module based on a feature attribute of each DOM, a page template and page metadata that match the DOM is:
for each of the target DOMs, obtaining, based on the feature attribute of the DOM, the page template and the page metadata that match the DOM.

13. The client according to claim 11 or 12, wherein
the display module is further configured to display a custom interface when the transceiver module receives a page customization request;
the transceiver module is further configured to receive a configuration operation on the custom interface to obtain page metadata generated by the configuration operation;
the client further comprises:
an establishment module, configured to establish an association relationship between the page metadata and a first attribute of a DOM; and
the transceiver module is further configured to send the page metadata to the server, so that the server saves the page metadata.

14. The client according to claim 13, wherein the feature attribute comprises a second attribute and the first attribute, and the initial page content further comprises a page module and the page metadata; and
a specific manner of the obtaining, by the obtaining module based on a feature attribute of each DOM, a page template and page metadata that match the DOM comprises:
searching the initial page content for a page template matching the second attribute of each DOM and the page metadata associated with the first attribute of the DOM.

15. The client according to claim 13, wherein the feature attribute comprises a second attribute and the first attribute, and a specific manner of the obtaining, by the obtaining module based on a feature attribute of each DOM, a page template and page metadata that match the DOM is:
sending a request message to the server, wherein the request message is used to request the page template and the page metadata of each DOM, and the request message comprises the second attribute and the first attribute of the DOM; and
receiving a page template matching the second attribute and the page metadata associated with the first attribute that are returned by the server based on the request message.

16. A server, comprising:
a transceiver module, configured to receive a page loading request sent by a client; and
an obtaining module, configured to obtain initial page content matching the page loading request, wherein the initial page content comprises a front-end framework and at least one DOM, wherein
the transceiver module is further configured to send the initial page content to the client.

17. The server according to claim 16, wherein the server further comprises:
a determining unit, configured to: determine current load of the server, and when the load exceeds a preset load threshold, trigger the obtaining module to perform the operation of obtaining initial page content matching the page loading request.

18. The server according to claim 17, wherein the server further comprises:
a rendering module, configured to: when the load does not exceed the preset load threshold, render a page based on the page loading request to obtain source code of an HTML page; and
the transceiver module is further configured to: send the source code to the client, and the client displays the HTML page based on the source code.

19. The server according to any one of claims 16 to 18, wherein
the transceiver module is further configured to receive page metadata sent by the client; and the server further comprises:
a saving module, configured to save the page metadata.

20. The server according to any one of claims 16 to 18, wherein the initial page content further comprises a page template and page metadata;
the transceiver module is further configured to receive a request message sent by the client, wherein the request message is used to request a page template and page metadata of each DOM, and the request message comprises a second attribute and a first attribute of the DOM; and
the transceiver module is further configured to return, based on the request message, a page template matching the second attribute and page metadata associated with the first attribute to the client.
